# EUROPEAN PATENT APPLICATION

(11) **EP 1 298 448 A1**
(43) Date of publication of application: **02.04.2003**
(21) Application number: 02396129.5
(22) Date of filing: 28.08.2002
(51) Int. Cl.: G01S 5/14

(54) **Assisted GPS positioning**

(30) Priority: 29.08.2001 FI 20011727
(71) Applicant: Sonera Oyj, 00510 Helsinki (FI)
(72) Inventor: Taavitsainen, Jari, 20740 Turku (FI); Karhu, Pekka, 00330 Helsinki (FI)
(74) Representative: Äkräs, Tapio

(57) **Abstract**

A method for carrying out assisted GPS positioning and a system comprising a GPS server (70), a mobile communications network (PLMN), and at least one A-GPS terminal (10), the terminal containing a GPS part (GPS) and an mobile station part (MS) operating in the mobile communications network, and determining means (60) for determining first location information of the terminal, the GPS server (70) being configured to determine GPS assistance data based on the first location information, the system being configured to transmit the GPS assistance data to the A-GPS terminal through the mobile communications network in a class 0 short message, the A-GPS terminal (10) being configured to carry out GPS measurements by applying the GPS assistance data, and the system being configured to determine second location information of the terminal (10) on the basis of the GPS measurements.

## Description

### BACKGROUND OF THE INVENTION

The invention relates to carrying out assisted GPS positioning and particularly to transmitting GPS assistance data.

GPS (Global Positioning System) is based on a system of satellites orbiting the earth and it is maintained by the United States. Each satellite transmits individual radio signals. When a signal is received on the earth, the time it has travelled enables the distance to the transmitting satellite to be calculated. When the "field of view" of a receiver used for positioning covers a plural number of satellites, simultaneous distance measurements can be carried out to determine unambiguously the location of a point of measurement in a three-dimensional space.

The GPS system consists of 24 active satellites whose orbits are arranged such that at least four satellites are continuously visible at each point on the face of the earth, even such that the satellites are in an advantageous geometrical position with regard to position finding (i.e. the satellites are not to close to one another or to the horizon). In principle four simultaneously visible satellites (or even three, if the observer is assumed to be on the face of the earth) are already sufficient for accurate positioning, although in practice there are usually more visible satellites. In that case the GPS receiver may either select four most suitable satellites or use the data provided by more satellites to obtain a more reliable result.

Before the measurement for the actual positioning is carried out, the GPS receiver must find the signals of the visible satellites and tune to them. This initialisation process of the GPS receiver may take as long as several minutes. Moreover, if the receiver or, to be more precise, its receiving antenna is inside a vehicle or a building, for example, and there is no unobstructed connection to the satellites, the signals coming from the satellites may attenuate considerably and further complicate the initialisation process of the receiver.

To speed up the initialisation of a GPS receiver, an Assisted GPS positioning system A-GPS has been developed. A-GPS is based on submitting suitable updated source data to a GPS receiver the position of which is at least roughly known, the data informing the receiver about satellites that are visible to it. When the receiver receives the data about the relevant satellites, it is capable of tuning to the frequencies of the satellites quicker and easier also in shadow regions.

The assistance data are typically formed in a specific server that knows the location of the satellites in a certain region, for example, or globally.

Assisted GPS positioning may be carried out by connecting an A-GPS receiver to a mobile station, such as a mobile station of the GSM system (Global System for Mobile Communications), in which case the assistance data may be transmitted to the receiver via the mobile communications network. In accordance with the prior art, the assistance data are broadcast commonly to a plurality of receivers. For more detailed description of the prior art, reference is made for example to patent publication US 6,204,808, which discloses a solution for transmitting assistance data. In addition, for the use of the GSM system, for example, reference is made to the 3GPP (3^{rd} Generation Partnership Project) publication TS 04.35 V8.3.0 (2001-01), which defines a recommendation for transmitting GPS assistance data by means of a SMSCB (Short Message Service Cell Broadcast) cell message.

A problem with the above arrangement in which the assistance data is transmitted as a broadcast message is that a broadcast often requires considerable changes to be made to the infrastructure of the mobile communications network: for example a communications interface is typically required from the server providing the assistance data to a base station controller of the mobile communications network to implement the broadcast from base stations controlled by the base station controller. In addition, the solutions provided by different manufacturers are often incompatible particularly as regards interfaces, for example, which complicates the matching of the devices of the different manufacturers and may therefore increase the costs arising from the system.

### BRIEF DESCRIPTION OF THE INVENTION

It is therefore an object of the invention to provide a method and equipment implementing the method to allow the above problems to be solved. The objective of the invention is achieved by a method and system characterized by what is stated in the independent claims 1, 11, 17 and 21. The preferred embodiments of the invention are disclosed in the dependent claims.

The invention is based on transmitting GPS assistance data to an A-GPS terminal in a message provided by a short message service, i.e. in a class 0 short message.

An advantage of the method and system of the invention is that the use of short messages for transmitting assistance data does not require any particular changes in the infrastructure of a mobile communications network supporting a short message service, and the functionality of the invention is therefore easy to implement in existing mobile communications networks. In addition, the use of class 0 short messages in particular does not affect the functioning of short messages of other classes, i.e. classes 1, 2 and 3. Further, class 0 short messages are advantageous to use, because they are not usually stored in the memory of the mobile station, for example, and thus short messages used for transmitting assistance data do not unnecessarily load the memory of the mobile station. Still further, the reception and transmission of class 0 short messages at the terminal can be implemented to take place such that the user of the mobile station does not notice them at all and no active measures are required of the user.

### BRIEF DESCRIPTION OF THE DRAWINGS

In the following, the invention will be described with reference to the preferred embodiments and the accompanying drawings, in which
Figure 1 is a simplified block diagram of a system for carrying out assisted GPS positioning;
Figure 2 is a signalling diagram illustrating the implementation of MS-assisted GPS positioning according to a preferred embodiment of the invention;
Figure 3 is a signalling diagram illustrating the implementation of MS-based GPS positioning according to a preferred embodiment of the invention; and
Figure 4 is a signalling diagram illustrating the implementation of assisted GPS positioning according to a preferred embodiment of the invention.

### DETAILED DESCRIPTION OF THE INVENTION

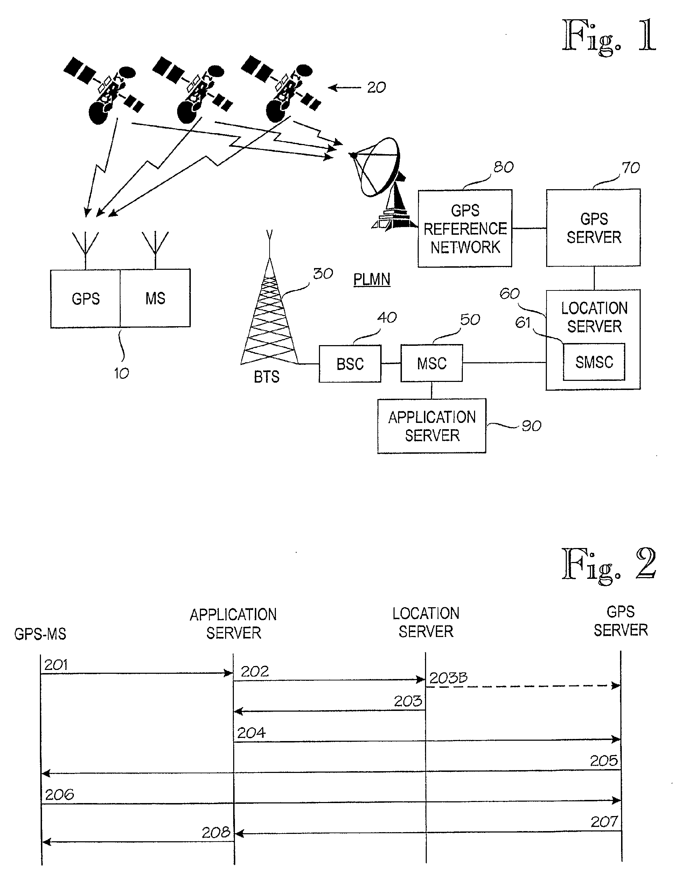

Figure 1 shows a system for positioning an A-GPS terminal 10. Figure 1 only contains elements that are essential in the description of the embodiments of the invention, although a person skilled in the art will find it apparent that in practice the system also comprises other functionalities and structures that need not be described in greater detail in this context, because additional information about them is readily available. The A-GPS terminal 10 comprises a GPS part GPS and an associated mobile station part MS. The GPS part GPS and the mobile station part MS are preferably interconnected by a two-directional telecommunications connection allowing the parts to exchange information relating to GPS positioning, for example. The parts are typically integrated into a single entity and they may also share common components, such as a display. The parts may also be physically separate interconnected devices. The terminal 10 is typically portable, although it may also be a device fixedly mounted in a vehicle or a building. The mobile station part MS is configured to receive GPS assistance data from a mobile communications network PLMN (Public Land Mobile Network) and to transmit them to the GPS part. The GPS part, in turn, is configured to carry out GPS measurements from GPS satellites 20 by means of the GPS assistance data. In the example the mobile network PLMN is described using network element terminology of the GSM system. The terminology should, however, be interpreted broadly and not restrictively. The invention can also be applied in connection with other mobile communications systems in which a short message service, or the like, is known, for example in the third generation UMTS system (Universal Mobile Telecommunications System).

From a base station 30 there is a two-directional radio link to the terminal 10. A mobile services switching centre 50 has a connection to the base station controller 40, which monitors and controls the base stations 30. The base station controller 40 is mainly responsible for frequency management and the control of the base station 30. The base station 30 and its antennas are usually located in the centre of the coverage area, i.e. a cell. If the cell is divided into sectors, the base station 30 is located at the tip of a sector. One factor determining cell size is the transmission power of the transceivers of the base station 30.

The Figure further shows a location server 60, which is a typically a part of the mobile communications network and connected to it via a Signalling System 7 SS7 interface, for example. The location server 60 comprises of the equipment components, software components and telecommunications links needed for implementing a positioning service. The location server 60 carries out the positioning of the subscriber terminal (the mobile station MS of the mobile communications network) 10 defined in a location request submitted to the server. The basis of the positioning may be that the server 60 first finds out the serving cell of the terminal 10. Since the locations of the different cells of the mobile communications network are also known, it is possible to know the location of the mobile station 10 at the accuracy of a cell. The server 60 itself may comprise a database containing information about the locations of the mobile communications network cells, or it may use a separate database. The server 60 may inform the location of the mobile station 10 by means of x- and y-coordinates, for example, or by some other appropriate means. For example the location of the base station 30 corresponding to the serving cell may be given as a coordinate. The location server 60 is also capable of defining the location of the mobile station more precisely for example by means of what is known as a timing advance or by applying some other known method, particularly if cell size in the mobile communications network is large. However, what is relevant to the invention is that the location server enables a rough estimate of the location of the mobile station 10, at the accuracy of a mobile communications network cell, for example, to be obtained at a particular moment.

The system of Figure 1 further comprises a GPS server 70 and an associated GPS reference network 80. In the Figure the GPS server is connected to the location server 60, but it could also be connected directly to the mobile communications network. The connection may be for example an IP-based (Internet Protocol) telecommunications connection. The GPS server 70 may also be physically connected for example to the location server 60 such that they form a single network element, this being not significant in view of the basic idea of the invention. The GPS reference network 80 comprises a number of GPS reference receivers that cover a specific geographical area, or the entire globe, and observe the location of the GPS satellites 20 in relation to the earth. An example of such a global reference network is the network maintained by Global Locate Inc., Glen Rock, New Jersey, USA. Data about the location of the satellites 20 is transmitted to the GPS server 70, the server 70 thus having global data about the location of the satellites 20, for example, and it is capable of determining those satellites 20 that are visible, i.e. available for use, from a certain point. By informing the location of the terminal 10 to the GPS server 70 it is therefore possible to obtain from the server the data about the satellites 20 visible at the location in question, i.e. the GPS assistance data, which is then used in assisted GPS positioning in the manner already described. For more detailed description of the format of the GPS assistance data, reference is made for example to US 6,204,808 and for the use of the GSM system in particular, to the 3GPP recommendation TS 04.35. The invention is not, however, in any way restricted to the solutions presented in these publications.

A basic idea of the invention is that GPS assistance data is transmitted to the terminal 10 by means of a class 0 short message. It is assumed that a person skilled in the art is familiar with the SMS (Short Message Service). If necessary, additional information about the short message service is available for example from the following ETSI (European Telecommunications Standards Institute) standards: GSM 03.38; "Digital cellular telecommunications system (Phase 2+); Alphabets and language-specific information" and GSM 03.40; "Digital cellular telecommunications system (Phase 2+); Technical Realization of the Short Message Service (SMS); Point-to-Point (PP)", which will be included herein as references. For transmitting short messages, the mobile communications network comprises one or more Short Message Service Centers SMSC through which short messages travel to and from mobile stations. Figure 1 shows a short message center 61 implemented, by way of example, in connection with the location server 60 and assumed, again by way of example, to be reserved for transmitting short messages pertaining to assisted GPS positioning, such as GPS assistance data. The short message center 61 may also locate somewhere else in the mobile communications network and be an independent element.

Figure 2 is a signalling diagram for carrying out MS-assisted positioning according to a preferred embodiment of the invention. In this context, the term MS-assisted means that the terminal 10 only carries out GPS measurements, whereas the location of the mobile station is determined in an element external to the terminal, such as the GPS server 70. In step 201 the terminal sends a service request to an application server 90. Although in Figure 1 the application server 90 is shown as a separate element connected to the mobile communications network, it represents generally any system element comprising an application that requires the exact location of the terminal 10, the application being implemented for example as a computer program executed by a processor. The application may also function in connection with some other system element. The service request 201 may be transmitted by means of a short message, for example, or by some other appropriate means. The transmission of the service request may be initiated by the user of the terminal 10, or it may take place automatically, by the terminal's own initiative. The application server 90 then inquires in step 202 the rough location, at the accuracy of a cell for example, of the terminal 10 that sent the service request from the location server 60. In step 203 the location server 60 transmits for example the x- and y-coordinates of the terminal 10 to the application server 90, which forwards them to the GPS server 70 in step 204. Instead of the transmission of the coordinates through the application server, i.e. steps 203 and 204, in an alternative embodiment the location server 60 may transmit the coordinates of the terminal 10 directly to the GPS server 70 in step 203B. Using the coordinates it has received, the GPS server 70 forms the GPS assistance data.

In accordance with the invention, the GPS assistance data are transmitted in a class 0 short message to the terminal 10 (step 205). This is preferably implemented such that the GPS server 70 transmits a class 0 short message, which thus comprises the GPS assistance data, by using the short message service center 61, which is preferably reserved for transmitting messages pertaining to GPS positioning. In the GSM system, for example, the indication 'class 0' is entered in a TP Data Coding Scheme (TP-DCS) field of the short message. The short message class may be set already at the GPS server 70, or the mobile service switching center 61 may be configured to assign class 0 to the short message before the message is transmitted to the terminal 10. It is also possible that the GPS assistance data is transmitted from the GPS server 70 to the location server 60 first by using other means and only from the location server 60 to the terminal 10 it is transmitted by means of a class 0 short message. In fact, what is relevant to the invention is that the terminal 10 receives the GPS assistance data in a class 0 short message, irrespective of the system element that transmitted the message. When processed in the terminal, a class 0 short message is usually not stored in any memory of the terminal, as for example a class 1 short message, which is stored in the terminal's memory, or a class 2 short message, which is stored in the memory of the SIM (Subscriber Identity Module) card installed in the terminal. According to a preferred embodiment of the invention, the terminal 10 is configured to function such that when receiving a class 0 short message, the mobile station part MS of the terminal 10 transfers any GPS assistance data contained in the message directly to the GPS part, without indicating the received short message to the user on the terminal display, for example. The user of the terminal 10 is therefore not required to take any measures to handle this type of short messages, and the GPS assistance data can be transmitted with the user being fully unaware of it. Short messages of classes 1, 2 and 3 may be handled in the terminal 10 in the usual manner; their use is not affected by the use of class 0 short messages according to the invention. The terminal 10 may be configured to transfer the contents of all received class 0 short messages directly from the mobile station part MS to the GPS part GPS, in which case any GPS assistance data included in the messages are also transferred to the GPS part. Alternatively, the mobile station part MS may check the contents of a received class 0 short message before transmitting it to the GPS part and transmit the contents, or only a part of it, if it contains GPS assistance data or other data to be transmitted to the GPS part. If the mobile station MS detects that the short message does not contain any GPS data, it may handle the short message in the usual manner by showing it on the display, for example. This is not, however, relevant to the basic idea of the invention. The mobile station part MS may transfer the contents of the class 0 short message to the GPS part as it is. It is also possible that the mobile station part MS first separates from the received class 0 short message the GPS assistance data or other data addressed to the GPS part and transfers only these data to the GPS part. Any other data included in the short message than those to be transferred to the GPS part may be discarded, for example, or processed in some other way in the mobile station part MS. In other words, what is relevant to the invention is that at least the GPS assistance data are transferred in the mobile station part MS to the GPS part GPS. The maximum length of a GPS assistance data message according to the recommendation 3GPP TS 04.35, for example, is 82 octets, whereas the maximum length of the data to be transmitted in a short message of the GSM system is 140 octets. Thus a GPS assistance message conforming to the above recommendation fits well into one short message. The extra space left in the short message can be filled with filling bits, or it may be used for transmitting some other data. In addition, the message may be provided with a predetermined identifier which allows the terminal 10 to detect that the message contains GPS assistance data. The precise format and contents of the GPS assistance data are, however, not relevant to the basic idea of the invention.

Since the example of Figure 2 illustrated MS-assisted positioning, the terminal uses its GPS part to carry out GPS measurements by means of the data obtained from the satellites 20 in the GPS assistance data message 205 and then sends the measurement results in step 206 to the GPS server 70, which calculates the precise location of the terminal according to the measurement results. According to a preferred embodiment of the invention the measurement results are also transmitted 206 in a class 0 short message. The mobile station part MS of the terminal 10 is preferably configured to use the short message service center 61 for transmitting short messages pertaining to GPS positioning and also to transmit the measurement results in a class 0 short message, without the user of the terminal being required to take any action to send the message or the transmission of the message being shown to the user in any other way either.

In step 207 the GPS server 70 returns the information about the exact location of the terminal 10 to the application server 90 that requested it. By applying the exact location information it has received, the application terminal forms the contents of the service requested by the terminal and sends the contents to the terminal 10 in step 208.

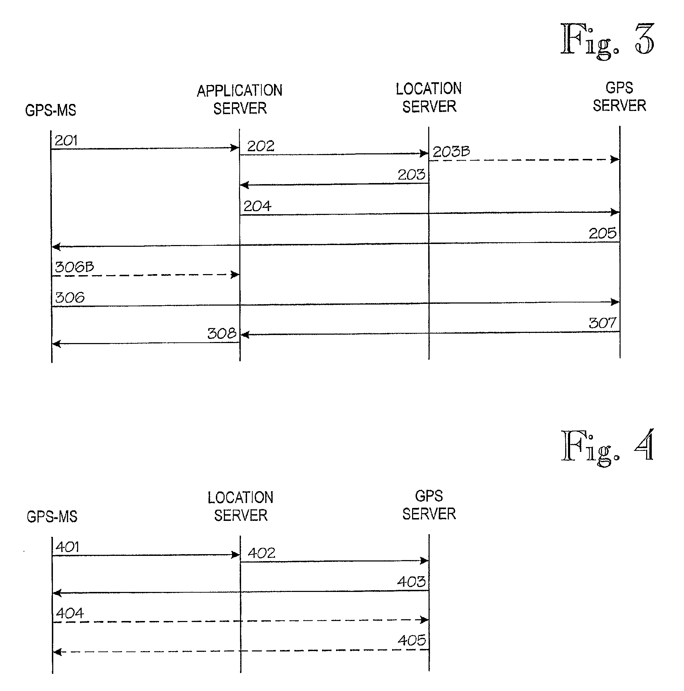

Figure 3 is a signalling diagram illustrating the implementation of MS-based positioning according to a preferred embodiment of the invention. In this context the term 'MS-based' means that the terminal 10 not only carries out the GPS measurements but also defines the exact location of the terminal 10 on the basis of the measurements. Steps 201, 202, 203, 204, 203B and 205 were already discussed in connection with Figure 2 and therefore the description need not be repeated. Since the positioning in question is MS-based, the mobile station uses its GPS part to make the GPS measurements utilizing the data it has received in the GPS assistance data message from the satellites 20 and on the basis of the measurement results it then calculates its exact location. The exact location information is then transmitted 306 to the GPS server preferably in a class 0 short message. In step 307 the GPS server 70 returns the information about the exact location of the terminal 10 to the application server 90 of the application that requested the information. Instead of transmitting the location information through the GPS server, i.e. steps 306 and 307, in an alternative embodiment the terminal 10 may send the information about its exact location it has determined directly to the application server as shown in step 306B. With the help of the exact location information it has received, the application server 90 forms the contents of the service requested by the terminal 10 and sends the contents to the terminal 10 in step 308.

Figure 4 is a signalling diagram illustrating the implementation of positioning according to a preferred embodiment of the invention when the application that needs the information about the exact location of the terminal 10 resides in the terminal 10. The application may be for example a computer program, or the like, running in a processor. In its simplest form, such an application residing in the terminal 10 may be for example an application that shows the exact location of the terminal 10 to the user on the terminal display. In that case a message is sent in step 401 to the location server 60 requesting for a rough definition of the location of the terminal 10 at the accuracy of a cell, for example. In step 402 the location server 60 transmits for example the x- and y-coordinates of the terminal 10 preferably directly to the GPS server 70. On the basis of the received coordinates, the GPS server 70 forms the GPS assistance data and transmits them, according to the invention, in step 403 to the terminal 10 using a class 0 short message, as described above in connection with Figures 2 and 3. Then, if MS-based positioning is concerned, the terminal 10 carries out the GPS measurements on the basis of the GPS assistance data, defines the exact location of the terminal 10 on the basis of the measurements and transmits the exact location information to the terminal application that needs it. On the other hand, if MS-assisted positioning is concerned, the terminal 10 only carries out the GPS measurements and transmits the results to the GPS server 70 in step 404 using preferably a class 0 short message. On the basis of the measurement results, the GPS server 70 calculates the exact location of the terminal 10 and returns the information about its exact location to the terminal in step 405, the terminal then transmitting the information to the application that requested it.

In the examples described above in connection with Figures 2, 3 and 4 it is also possible that the positioning is activated (steps 201 and 401) by some other system element than the terminal 10 (or the user of the terminal). In that case the exact location information (e.g. 207, 306B or 405) of the terminal 10, for example, can also be transmitted to the element that requested the positioning. This procedure can be applied for example for controlling cargo transport by installing an unmanned terminal 10 in a cargo container, for example, whereby the location of the terminal, and thereby the container, can be monitored as the transport proceeds for example from a separate control room (not shown) connected to the system of Figure 1. This provides a means for making even an unmanned terminal 10 to perform GPS positioning from the control room, for example.

Moreover, the terminal 10 is preferably configured to reject any class 0 short message received after the data included in the message, such as the GPS assistance data, has been utilized and are no longer needed. This is preferably carried out without any action taken by the user of the terminal 10 to avoid redundant information from accumulating in the terminal 10. This is particularly advantageous in a case such as the one above where the terminal 10 is unmanned, because otherwise the memory of the terminal 10 might become full.

It is apparent to a person skilled in the art that as technology advances, the basic idea of the invention can be implemented in various ways. The invention and its embodiments are therefore not restricted to the above examples, but they may vary within the scope of the claims.

## Claims

1. A method for carrying out assisted GPS positioning in a system containing a GPS server (70), a mobile communications network (PLMN) and at least one A-GPS terminal (10), the terminal containing a GPS part (GPS) and a mobile station part (MS) operating in the mobile communications network, the method comprising:
determining first location information of the terminal;
determining GPS assistance data based on the first location information of the terminal in a GPS server, the GPS assistance data comprising information about GPS system satellites (20) that are visible at the location determined according to the first location information;
transmitting (205; 403) the GPS assistance data to the A-GPS terminal through the mobile communications network;
carrying out GPS measurements in the A-GPS terminal by applying the GPS assistance data; and
determining second location information on the basis of the GPS measurements, **characterized by** transmitting (205; 403) the GPS assistance data to the A-GPS terminal in a class 0 short message.

2. A method according to claim 1, **characterized in that** the second location information of the A-GPS terminal (10) based on the GPS measurements is determined in the terminal.

3. A method according to claim 1, **characterized in that** the second location information of the A-GPS terminal (10) based on the GPS measurements is determined in the GPS server (70).

4. A method according to claim 3, **characterized by** further comprising:
transmitting (206) the GPS measurement data from the terminal (10) to the GPS server (70) in a class 0 short message.

5. A method according to claim 1, 2, 3 or 4, **characterized in that** 'class 0' is entered in the TP-DCS field of the short message.

6. A method according to any one of the preceding claims, **characterized in that** the first location information of the A-GPS terminal (10) is determined on the basis of the cell serving the terminal in the mobile network (PLMN).

7. A method according to any one of the preceding claims, **characterized by** transferring the GPS assistance data comprised in the class 0 short message received in the A-GPS terminal (10) from the mobile station part (MS) to the GPS part (GPS).

8. A method according to claim 8, **characterized by** transferring the contents of each received class 0 short message in the A-GPS terminal (10) from the mobile station part to the GPS part.

9. A method according to claim 8, **characterized by** detecting in the mobile station part MS of the A-GPS terminal (10) whether the received class 0 short message comprises GPS assistance data.

10. A method according to any one of the preceding claims, **characterized by** rejecting the contents of a class 0 short message comprising GPS assistance data and received at the A-GPS terminal (10) after the GPS measurements have been carried out on the basis of the GPS assistance data in question.

11. A system comprising
a GPS server (70);
a mobile communications network (PLMN);
at least one A-GPS terminal (10), the terminal containing a GPS part (GPS) and a mobile station part (MS) operating in the mobile communications network; and
determining means (60) for determining first location information of the terminal, wherein
the GPS server (70) is configured to determine GPS assistance data based on the first location information, the GPS assistance data comprising information about GPS system satellites (20) that are visible at the location determined according to the first location information;
the system is configured to transmit the GPS assistance data to the A-GPS terminal through the mobile communications network;
the A-GPS terminal (10) is configured to carry out GPS measurements by applying the GPS assistance data; and
the system is configured to determine second location information of the terminal (10) on the basis of the GPS measurements, **characterized in that**
the system is configured to transmit the GPS assistance data to the A-GPS terminal (10) in a class 0 short message.

12. A system according to claim 11, **characterized in that** the A-GPS terminal (10) is configured to determine the second location information of the A-GPS terminal (10) based on the GPS measurements.

13. A system according to claim 11, **characterized in that** the GPS terminal (70) is configured to determine the second location information of the A-GPS terminal (10) based on the GPS measurements

14. A system according to claim 13, **characterized in that** the system is further configured to transmit the GPS measurement data from the A-GPS terminal (10) to the GPS sever (70) in a class 0 short message.

15. A system according to claim 11, 12, 13 or 14, **characterized in that** 'class 0' is entered in the TP-DCS field of the short message.

16. A system according to any one of the preceding claims 11 to 15, **characterized in that** the determining means (60) for determining the first location information of the A-GPS terminal (10) are configured to determine the first location information of the terminal on the basis of the cell serving the terminal in the mobile network.

17. A system element in a system comprising a GPS server (70), a mobile communications network (PLMN), and at least one A-GPS terminal (10), the terminal containing a GPS part (GPS) and a mobile station part (MS) operating in the mobile communications network, and determining means (60) for determining first location information of the terminal, wherein
the GPS server (70) is configured to determine GPS assistance data based on the first location information;
the system element (60) is configured to transmit the GPS assistance data to the A-GPS terminal through the mobile communications network;
the A-GPS terminal (10) is configured to carry out GPS measurements by applying the GPS assistance data, the GPS assistance data comprising information about GPS system satellites (20) that are visible at the location determined according to the first location information; and
the system is configured to determine second location information of the terminal (10) on the basis of the GPS measurements, **characterized in that**
the system element (60) is configured to transmit the GPS assistance data to the A-GPS terminal in a class 0 short message.

18. A system element according to claim 17, **characterized in that** the GPS server terminal (70) is configured to determine the second location information of the A-GPS terminal (10) based on the GPS measurements, wherein the system element (60) is further configured to transmit the GPS measurement data to from the terminal to the GPS server in a class 0 short message service.

19. A system element according to claim 17 or 18, **characterized in that** 'class 0' is entered in the TP-DCS field of the short message.

20. A system element according to any one of the preceding claims 17 to 19, **characterized in that** the determining means (60) for determining the first location information of the terminal are configured to determine the first location information of the A-GPS terminal (10) on the basis of the cell serving the terminal in the mobile network.

21. An A-GPS terminal in a system comprising a GPS server (70), a mobile communications network (PLMN), and determining means (60) for determining first location information of a terminal (10), the terminal comprising a GPS part (GPS) and a mobile station part (MS) operating in the mobile communications network, wherein
the GPS server (70) is configured to determine GPS assistance data based on the first location information and the system being configured to transmit the GPS assistance data to the A-GPS terminal through the mobile communications network, the GPS assistance data comprising information about GPS system satellites (20) that are visible at the location determined according to the first location information
the A-GPS terminal (10) is configured to carry out GPS measurements by applying the GPS assistance data, **characterized in that**
the system is configured to transmit the GPS assistance data to the A-GPS terminal (10) in a class 0 short message, wherein the A-GPS terminal (10) is configured to transfer the GPS assistance data comprised in the class 0 short message received at the mobile station part (MS) from the mobile station part to the GPS part (GPS).

22. An A-GPS terminal according to claim 21, **characterized in that** the A-GPS terminal (10) is configured to transfer the contents of each received class 0 short message from the mobile station part (MS) from the mobile station part to the GPS part (GPS).

23. An A-GPS terminal according to claim 21, **characterized in that** the mobile station part MS of the A-GPS terminal (10) is configured to detect whether a received class 0 short message comprises GPS assistance data.

24. An A-GPS terminal according to claim 21, 22 or 23, **characterized in that** the A-GPS terminal (10) is configured to determine the second location information of the A-GPS terminal on the basis of the GPS measurements.

25. An A-GPS terminal according to claim 21, 22 or 23, **characterized in that** the GPS server (70) is configured to determine the second location information of the A-GPS terminal on the basis of the GPS measurements, wherein the terminal (10) is further configured to transmit the GPS measurement data to the GPS server in a class 0 short message.

26. An A-GPS terminal according to any one of the preceding claims 21 to 25, **characterized in that** the terminal (10) is configured to reject the contents of a received class 0 short message comprising GPS assistance data after the terminal has carried out the GPS measurements on the basis of the GPS assistance data in question.

27. An A-GPS terminal according to any one of the preceding claims 21 to 26, **characterized in that** 'class 0' is entered in the TP-DCS field of the short message.

28. An A-GPS terminal according to any one of the preceding claims 21 to 27, **characterized in that** the determining means (60) for determining the first location information of the A-GPS terminal are configured to determine the first location information of the terminal (10) on the basis of the serving mobile network cell of the terminal.
